Europäisches Patentamt

European Patent Office

Office européen des brevets

(11) Publication number: 0 228 054
A2

# EUROPEAN PATENT APPLICATION

(21) Application number: 86117797.0

(22) Date of filing: 19.12.86

(51) Int. Cl.⁴: D06H 7/02 , B26D 5/32

(30) Priority: 25.12.85 JP 296419/85

(43) Date of publication of application:
08.07.87 Bulletin 87/28

(84) Designated Contracting States:
DE FR GB IT

(71) Applicant: YOSHIDA KOGYO K.K.
No. 1 Kanda Izumi-cho Chiyoda-ku
Tokyo(JP)

(72) Inventor: Morita, Toyoo
201-23, Kinoshitashin
Uozu-shi Toyama-Ken(JP)

(74) Representative: Casalonga, Axel et al
BUREAU D.A. CASALONGA OFFICE JOSSE &
PETIT Morassistrasse 8
D-8000 München 5(DE)

(54) Method and apparatus for cutting a chain of elongate products.

(57) In a method and apparatus for cutting a chain of longitudinally joined elongate products (II) into pieces (I2) of a desired length, the chain of elongate products (II) is intermittently fed by a feed unit (I6) through a first distance equal to the length of each piece (I2) to be severed, along a path through a detector (I5) and a cutting unit (I7) downstream of the detector (I5) and the chain (II) is cut successively into pieces (I2) of the desired length (I) at the cutting unit (I7) while the feed unit (I6) is inoperative. As the chain (II) is advanced, the joint portion (I3) of each adjacent pair of the elongate products (II) is detected by the detector (I5). Upon detection of the joint portion (I3), a control unit (35) computes the number of prospective pieces (I2) of the desired length (I) producible by severing from a longitudinal portion (L) of the chain (II) which extends from the present leading end of the chain toward the detected joint portion (I3) and terminates short of the detected joint portion (I3). When the computed number of pieces - (I2) have been severed, the chain (II) is advanced by a second distance until the detected joint portion - (I3) is located downstream of the cutting unit (I7). The chain (II) is cut to produce a severed piece - (I2a) including the detected joint portion (I3) which is received in a reciporcably movable container (33).

FIG. 1

## METHOD AND APPARATUS FOR CUTTING A CHAIN OF ELONGATE PRODUCTS

The present invention relates generally to the cutting of an elongate material such as a surface fastener, a slide fastener chain, an ornamental tape, or an elongate piece of cloth, and more particularly to a method and apparatus for cutting a chain of longitudinally joined elongate materials into pieces of a desired length.

In general, elongate products such as surface fasteners, slide fastener chains, ornamental tapes, or elongate pieces of cloth are stored and processed in the form of a chin composed of a series of such elongate products joined end to end. For the production of pieces of a desired length from the chain, it is customary to feed the chain stepwise along a path by an intermittently operative feed unit and then to sever the chain successively into pieces of the desired length by a cutting unit while the feed unit is inoperative. This synchronous operation of the feed unit with the cutting unit is interrupted each time a joint portion between two adjacent elongate procudts arrives at a detector disposed on the path. Upon detection of the joint portion, the chain is pulled forwardly by an operator until the detected joint portion is located downstream of the cutting unit which is then operated to remove a piece including the joint portion. Thereafter, the feed and cutting units resume their synchronous operation.

Due to the frequent interruption of the synchronous feeding and cutting operation and also due to the manual chain feeding, the aforesaid conventional practice is ineffective, low in productivity, laborious and time-comsuming. With the manual chain feeding, the severed pieces having the joint portions tend to have non-uniform lengths which would increase a loss of material.

The present invention seeks to provide a method and apparatus for automatically cutting a chain of longitudinally joined elongate products successively into pieces of a desired length at an increased rate of production without causing an objectionable interruption of the operation.

Acccording to a first aspect of the present invention, there is provided a method of cutting a continuous chain of longitudinally joined elongate products into pieces of a desired length, the chain having longitudinally spaced successive joint portions, said method comprising the steps of: feeding the chain of elongate products intermittently by a first distance equal to the length of each piece to be severed, along a path through a detecting station and a cutting station downstream of the detecting station; cutting the chain successively into pieces of the desired length at the cutting station while the chain is at rest; during said feeding, detecting the joint portion of each adjacent pair of the elongate products at the detecting station; in response to said detecting, computing the number of prospective pieces of the desired length producible by severing from a longitudinal portion of the chain which extends from the present leading end of the chain toward the detected joint portion and terminates short of the detected joint portion; repeating said feeding and said cutting until the computed number of pieces have been severed; thereafter, feeding the chain forwardly by a second distance until the detected joint portion is located downstream of the cutting station; cutting the chain to produce a severed a piece including the detected joint portion; and removing the last-named severed piece.

According to a second aspect of the present invention, there is provided an apparatus for cutting a continuous chain of longitudinally joined elongate products into pieces of a desired length, the chain having longitudinally spaced successive joint portions, said apparatus comprising: an intermittently operative feed unit for feeding the chain of elongate products along a path, said feed unit being selectively operative in a first mode in which the chain is fed by a first distance equal to the desired length of each pieces to be severed, or in a second mode in which the chain is fed by a second distance equal to the length of each piece having one joint portion; a cutting unit disposed on the path downstream of said feed unit for cutting the chain into severed pieces of the desired length while said feed unit is inoperative; a detector disposed on the path upstream of said cutting unit for producing a signal pulse each time the joint portion between each adjacent pair of the elongate products arrives at said detector; a control unit electrically connected with said detector, said feed unit and said cutting unit for, upon receipt of one signal pulse from said detector, computing the number of prospective pieces of the desired length producible by cutting the chain from a longitudinal portion of the chain which extends from the present leading end of the chain toward the detected joint portion and terminates short of the detected joint portion, and for producing, a first output signal, when the computed number of pieces have been severed by said cutting unit, to shift the operation of said feed unit from said first mode to said second mode, thereby advancing the detected joint portion forwardly beyond said cutting unit, and also for producing a second output signal, when the next following cutting has completed to produce a severed piece including the detected joint portion, to shift the operation of said feed unit from said second mode to said first mode; and a reciprocably movable cotainer unit electrically connected to said control unit for receiving the last-named servered pieces including the joint portion, said container unit including a container reciprocably movable between working position to receive the severed pieces and a standby position remote from the working position.

Many other advantages and features of the present invention will become manifest to those versed in the art upon making reference to the detailed description and the accompanying sheets of drawings in which a preferred structural embodiment incorporating the principles of the present invention is shown by way of illustrative example.

Figure I is a schematic perspective view of an apparatus for cutting a chain of longitudinally joined elongate products according to the present invention;

Figure 2 a diagrammatical view illustrative of the operative connection between various parts of the apparatus shown in Figure I;

Figures 3A through 3D are schematic plan views illustrative of the manner in which the chain is severed into successive pieces of a desired length;

Figure 4 is an enlarged cross-sectional view of a joint portion including a staple interconnecting two adjacent elongate products;

Figure 5 is a fragmenrary plan view of an example of a deformed joint portion of the chain;

Figure 6 is a fragmentary plan view of another joint portion including a light-reflective adhesive tape joining two adjacent elongate products; and

Figure 7 is a view similar to Figure 6 with the joint portion deformed undesirably.

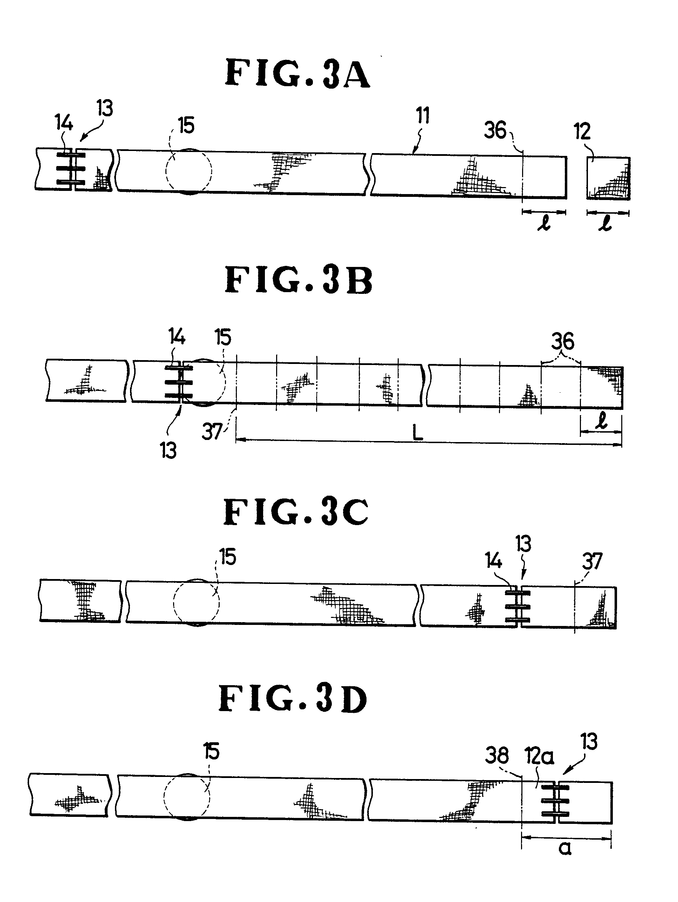

Figures I and 2 show an apparatus I0 for automatically cutting a chain of elongate products II successively into pieces I2 of a desired length $l$ . As shown in Figures 3A through 3D, the elongate products II are joined end to end with joint portions I3 disposed therebetween. Each of the joint portions I3 includes three staples I4 of metal interconnecting an adjacent pair of the elongate products II.

As shown in Figures I and 2, the apparatus I0 generaly includes a detector I5 disposed at the upstream side of a path of movement of the chain of elongate products II (hereinafter referred to as "chain") for detecting the joint portions I3 of the chain II, an intermittently operative feed unit I6 disposed downstream of the detector I5 for intermittently feeding the chain II longitudinally along the path, a cutting unit I7 disposed downstream of the feed unit I6 for cutting the chain II into pieces I2 of the desired length $l$, a container I8 disposed below the cutting unit I7 for receiving the severed pieces I2 therein, and a reciprocative container unit

I9 disposed adjacent to the cutting unit I7 for receiving threin severed pieces I2a (Figure 3D) including the joint portions I3. Between the detector I5 and the feed unit I6, there is provided a guide roller 20 for guiding therearound the chain II. The chain II, as it passes around the guide roller 20, changes its direction of movement from a horizontal direction to a vertically downward direction.

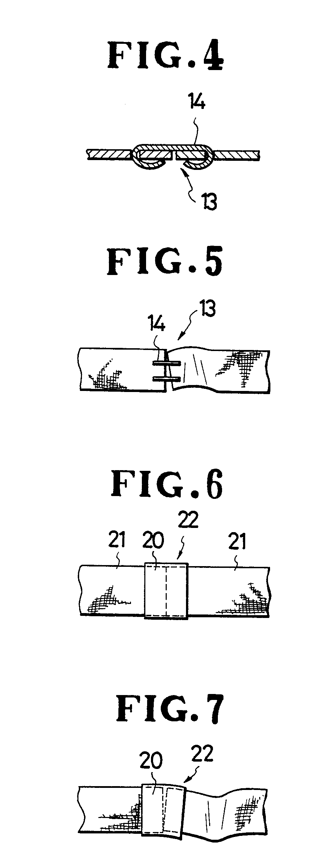

The detector I5 is so constructed as to suit with the properties of the joint portions to be detected by the detector I5. Accordingly, for use with the chain II having metallic staples I3 in the point portions I2 as shown in Figures 3A -3D, the detector I5 preferably comprises a metal detector. In case a light-reflective adhesive tape 2I is used to join each adjacent pair of the elongate products 22, 22 as shown in Figure 6, a reflective-type photoelectric detector will be employed. The detector I5 is disposed in confronting relation to one surface of the chain II and produces one signal pulse each time the joint portion I3 of each adjacent pair of the elongate products II arrives at the detector I5.

The feed unit I6 includes a drive roller 24 and a presser roller 25 pressed against the drive roller 24. The drive roller 24 is connected with a suitable drive means such as an electric stepper motor 26 and is driven by the latter to rotate through an angle for advancing the chain II stepwise along the path. The stepper motor 26 and hence the feed unit I6 is selectively operative in a first mode in which the chain II is advanced stepwise by a distance equal to the desired length $l$ of pieces I2 to be severed, or in a second mode in which the chain II is advanced by a distance equal to the length of the pieces I2a having the joint portions I3 (Figure 3D). The presser roller is rotatably mounted on one end of a support lever 27 pivatably movable about a pin 28. A tension coil spring 29 is connected at one end with the other end of the support lever 27 to turn the latter about the pin 28 in the clockwise direction (Figure I), thereby urging the presser roller 25 against the drive roller 24. With the drive and presser rollers 24, 25 thus constructed, the chain II is positively intermittently advanced accurately by the distance $l$ or $a$. The stepper motor 26 may be substituted by another intermittent drive means such as a hydraulic stepper motor, or a crank-and-cam mechanism. As the joint portions I3 of the chain II are relatively unstable and likely to be deformed during advancing movement of the chain II, it is preferable to locate the drive and presser rollers 24, 24 close to the cutting unit I7, thereby ensuring a clean and accurate severance of the pieces I2a including such unstable joint portions I3.

The cutting unit 17 includes a cooperative pair of blades 30, 31 disposed on opposite sides of the path. One of the blades 30 is immovable and the other blade 31 is reciprocably movable toward and away from the stationary blade 30. For reciprocating movement, the movable blade 31 is connected in driven relation to an actuator 32 such as an air cylinder, a hydraulic cylinder or a solenoid.

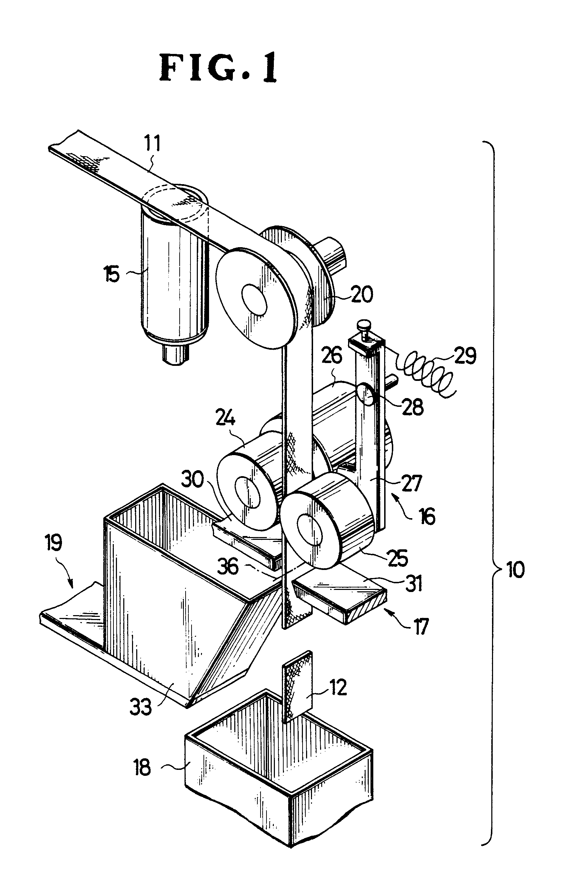

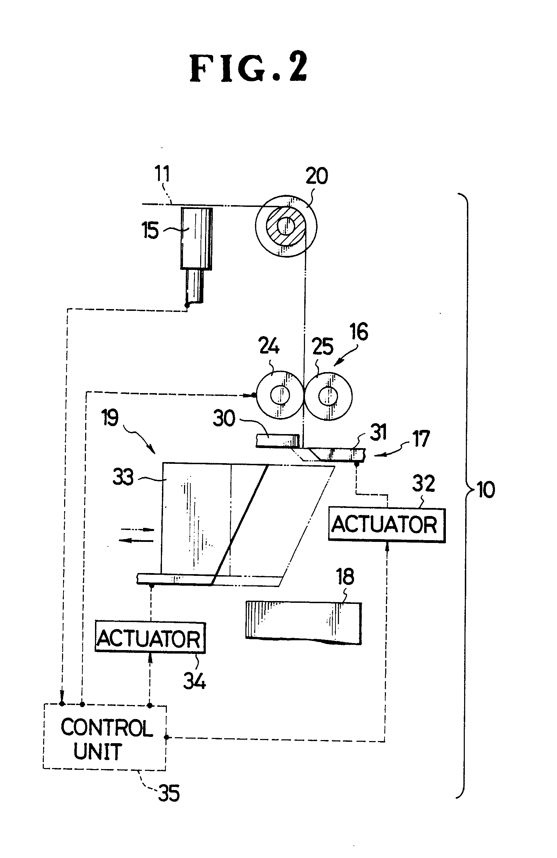

The container 18 is stationary while a container 33 of the container unit 19 is horizontally reciprocably movable between a standby position - (solid lines in Figure 2) which is displaced off the path in an upwardly leftward direction of the stationary container 18, and a working position - (phantom lines in Figure 2) which is located between the cutting unit 17 and the stationary container 18. The container 33 is normally held in the standby position and is driven by a suitable actuator 34 such as a fluid-actuated cylinder, to move toward the working position.

As shown in Figure 2, the apparatus 10 also includes a control unit 35 electrically connected with the detector 15, the stepper motor 26 (Figure I) of the feeding unit 16, the actuator 32 of the cutting unit 17 and the actuator 34 of the container unit 19, for controlling the operation of the units 16, 17, 19 in response to the detection of the joint portions 13 of the chain II. Preferably, the control unit 35 is of the type which includes a counter circuit (not shown) having a count register which is electrically resettable. The count register is set to a predetermined figure and, after the receipt of the signal pulse from the detector 15 and in response to operation of the feed unit 16, registered figure is counted down to zeor at which time an output signal is produced. The registered figure is essentially determined by the distance between the detector 15 and the cutting unit 17 devided by the length l of the pieces 12. In substitution with the counter circuit, the control unit 35 may have a speed controller or a timer which is linked with the detector 15 and the units 16, 17, 19 to control the operation of the units 16, 17, 19 in such a manner as described blow.

In operation, as the feed unit 16 is intermittently energized, the chain II is advanced stepwise by a distance which is equal to the length l (Figure 3A) of pieces 12 to be severed. While the feed unit 16 is inoperative, the cutting unit 17 is driven to sever the chain II along a transverse line 36 of severance with the result that pieces 12 of the desired length l are produced one at a time. The severed pieces 12 fall into the stationary container 18. Continuing such synchronous operation of the feed unit 16 and the cutting unit 17 causes one joint portion 13 to arrive at the detector 15 as shown in Figure 3B whereupon the detector 15 issue a signal pulse to the control unit 35. Upon receipt of the signal pulse, the control unit 35 computes the total number of prospective pieces 12 of the desired length l producible from a longitudinal portion L of the chain II which extends from the leading end of the chain II and terminates short of the detected joint portion 13. The aforesaid synchronous feeding and cutting operation is repeated until the computed number of pieces 12 have been severed (see a line 37 of severance in Figure 3C) whereupon the control unit 35 issue a first output signal to the feed unit 16 to shift the operation of the feed unit 16 from the first mode to the second mode. The first output signal is also delivered to the actuator 34 to move the container 33 from the standby position to the working position immediately below the cutting unit 17. With the next stepwise operation of the feed unit 16, the chain II advances through the distance a - (Figure 3D) so that the detected joint portion 13 is located downstream of the cutting unit 17. Then the cutting unit 17 is operated to cut the chain along a line 38 of severance, thereby producing a piece 12a having the detected joint portion 13. The severed piece 12a fall into the container 33. Upon completion of cutting of the piece 12a, the control unit 35 issues a second output signal to the feed unit 12 so as to to shift the operation of the same from the second mode to the first mode. The second output signal is also sent to the actuator 34 of the container unit 19 to return the container 33 from the working position to the standby position. The feeding unit 16 and the cutting unit 16 then resume their synchronous operation to thereby cut the chain II into the pieces 12 of the desired length l.

The length a of the pieces 12a varies with the length l of the pieces 12, however, in view of the tendency of the chain II toward the deformation at the joint portions 13 as shown in Figures 5 and 7, it is preferable to determine the length a to such an extent that all the pieces 12 have transverse severed edges even though the joint portions 13 are deformed or become wavy.

As described above, the operation of the feed unit 16, cutting unit 17 and the container unit 19 is automatically controlled to effect successive severance of the pieces 12 of the desired length l without interruption when the joint portions 13 are detected. The joint portions 13 are automatically cut off from the chain II and then separated from the pieces 12 of the desired length l. With the arragement of the present invention, an effective cutting off of the pieces 12 of the desired length from the chain of longitudinally connected elongate products II is attained.

## Claims

1. A method of cutting a continuous chain of longitudinally joined elongate products (11) into pieces (12) of a desired length ($l$), the chain (11) having longitudinally spaced successive joint portions (13), said method comprising the steps of: feeding the chain of elongate products (11) intermittently by a first distance equal to the length ($l$) of each piece (12) to be severed, along a path through a detecting station (15) and a cutting station (17) downstream of the detecting station; cutting the chain (11) successively into pieces (12) of the desired length ($l$) at the cutting station (17) while the chain (11) is at rest; during said feeding (a), detecting the joint portion (13) of each adjacent pair of the elongate products (11) at the detecting station (15); in response to said detecting (c), computing the number of prospective pieces (12) of the desired length ($l$) producible by severing from a longitudinal portion (L) of the chain (11) which extends from the present leading end of the chain toward the detected joint portion (13 and terminates short of the detected joint portion (13); repeating said feeding - (a) and said cutting (b) until the computed number of pieces have been severed; thereafter, feeding the chain (11) forwardly by a second distance until the detected joint portion (13) is located downstream of the cutting station (17); cutting the chain - (11) to produce a severed a piece (12$\underline{a}$) including the detected joint portion (13) and removing the last-named severed piece (12$\underline{a}$).

2. A method according to claim 1, said feeding of the chain being achieved by an intermittently operative feed unit (16) selectively operative in a first mode to advance the chain (11) by the first distance or in a second mode to advance the chain (11) in the second distance.

3. A method according to claim 1, said removing of the piece (12$\underline{a}$) including the joint portion (13) being achieved by allowing the piece (12$\underline{a}$) to fall into a container (33) reciprocably movable between a working position to receive the piece (12$\underline{a}$) and a standby position remote from the working position.

4. An apparatus (10) for cutting a continuous chain of longitudinally joined elongate products (11) into pieces (12) of a desired length ($l$ ), the chain - (11) having longitudinally spaced successive joint portions (13), said apparatus comprising: an intermittently operative feed unit (16) for feeding the chain of elongate products (11) along a path, said feed unit (16) being selectively operative in a first mode in which the chain (11) is fed by a first distance equal to the desired length ($l$) of each pieces (12) to be severed, or in a second mode in which the chain (11) is fed by a second distance equal to the length ($a$) of each piece (12$\underline{a}$) having one joint portion (13); a cutting unit (17) disposed on the path downstream of said feed unit (16) for cutting the chain (11) into severed pieces (12) of the desired length ($l$) while feed unit (16) is inoperative; a detector (15) disposed on the path upstream of said cutting unit (17) for producing a signal pulse each time the joint portion (13) between each adjacent pair of the elongate products (11) arrives at said detector (15); a control unit (35) electrically connected with said detector (15), said feed unit (16) and said cutting unit (17) for, upon receipt of one signal pulse from said detector (15), computing the number of prospective pieces (12) of the desired length ($l$) producible by cutting the chain (11) from a longitudinal portion (L) of the chain (11) which extends from the present leading end of the chain toward the detected joint portion (13) and terminates short of the detected joint portion (13), and for producing, a first output signal, when the computed number of pieces have been severed by said cutting unit (17), to shift the operation of said feed unit (16) from said first mode to said second mode, thereby advancing the detected joint portion (13) forwardly beyond said cutting unit (17), and also for producing a second output signal, when the next following cutting has completed to produce a severed piece (12$\underline{a}$ including the detected joint portion (13), to shift the operation of said feed unit (16) from said second mode to said first mode; and a reciprocably movable cotainer unit (19) electrically connected to said control unit (35) for receiving the last-named servered pieces (12$\underline{a}$) including the joint portion (13), said container unit (19) including a container (33) reciprocably movable between working position to receive the severed pieces (12$\underline{a}$) and a standby position remote from the working position.

5. An apparatus according to claim 4, for use with the joint portion (13) including at least one staple (14) of metal, said detector (15) comprising a metal detector.

6. An apparatus according to claim 4, for use with the joint portion (13) including at least a light-reflective adjesive tape (20), said detector (15) comprising a reflective-type photoelectric detector.

7. An apparatus according to claim 4, said feed unit (16) being disposed close to said cutting unit - (17).

8. An apparatus according to claim 4, further including a stationary container (18) disposed below said cutting unit (17) for recieving the severed pieces (12) of the desired length ($l$).

# FIG.1

# FIG.2

# FIG.3A

# FIG.3B

# FIG.3C

# FIG.3D

# FIG.4

14

13

# FIG.5

14    13

# FIG.6

21   20   22   21

# FIG.7

20   22